(19) Europäisches Patentamt / European Patent Office / Office européen des brevets

(11) **EP 4 717 539 A1**

(12) **EUROPEAN PATENT APPLICATION**
published in accordance with Art. 153(4) EPC

(43) Date of publication:
**01.04.2026 Bulletin 2026/14**

(21) Application number: **23938305.2**

(22) Date of filing: **25.12.2023**

(51) International Patent Classification (IPC):
**B60W 30/06** (2006.01)    **B60W 40/02** (2006.01)
**B60W 60/00** (2020.01)

(86) International application number:
**PCT/CN2023/141354**

(87) International publication number:
**WO 2024/239640 (28.11.2024 Gazette 2024/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.05.2023 CN 202310590218**

(71) Applicant: **Huizhou Desay SV Automotive Co.,
Ltd.
Huizhou, Guangdong 516006 (CN)**

(72) Inventors:
• **XIA, Xin**
  **Huizhou, Guangdong 516006 (CN)**
• **CHEN, Qingye**
  **Huizhou, Guangdong 516006 (CN)**
• **LU, Wei**
  **Huizhou, Guangdong 516006 (CN)**
• **SUN, Yuanguang**
  **Huizhou, Guangdong 516006 (CN)**

(74) Representative: **Carangelo, Pierluigi et al
Jacobacci & Partners S.p.A.
Via Tomacelli 146
00186 Roma (IT)**

(54) **ANGLED PARKING SPACE EXITING METHOD AND APPARATUS, VEHICLE AND STORAGE MEDIUM**

(57)    Provided are a method and apparatus for parking out of an angled parking space, a vehicle, and a storage medium. The method includes acquiring the current parking space coordinates of the current angled parking space and the current vehicle coordinates of the current vehicle; determining a compensation auxiliary line of the current vehicle in the current angled parking space, where the compensation auxiliary line is perpendicular to the longitudinal centerline of a vehicle body of the current vehicle and passes through a first parking space corner point of the current angled parking space, and the first parking space corner point is an endpoint of a parking-out parking space line of the current angled parking space in an opposite direction of the parking-out direction of the current angled parking space; and determining an interval distance between the current vehicle and the compensation auxiliary line according to the current parking space coordinates and the current vehicle coordinates and determining the interval distance as a parking-out compensation distance of the current vehicle. In this manner, the problem of easily colliding or scratching with a vehicle parked in a parking space in the parking-out direction during the angled parking-out process can be solved, thereby improving the parking performance, ensuring the safety of drivers and passengers, and avoiding economic losses.

Acquire current parking space coordinates of the current angled parking space and current vehicle coordinates of the current vehicle — S110

Determine a compensation auxiliary line of the current vehicle in the current angled parking space, where the compensation auxiliary line is perpendicular to a longitudinal centerline of a vehicle body of the current vehicle and passes through a first parking space corner point of the current angled parking space, and the first parking space corner point is an endpoint of a parking-out parking space line in the current angled parking space in an opposite direction of the parking-out direction of the current angled parking space — S120

Determine an interval distance between the current vehicle and the compensation auxiliary line according to the current parking space coordinates and the current vehicle coordinates and determine the interval distance as a parking-out compensation distance of the current vehicle — S130

Control the current vehicle to move the parking-out compensation distance and then park out of the current angled parking space — S140

**FIG. 1**

## Description

This application claims priority to Chinese Patent Application No. 202310590218.6 filed with the China National Intellectual Property Administration (CNIPA) on May 23, 2023, the disclosure of which is incorporated herein by reference in its entirety.

## TECHNICAL FIELD

The present application relates to the field of intelligent driving technologies and, in particular, to a method and apparatus for parking out of an angled parking space, a vehicle, and a storage medium.

## BACKGROUND

Currently, the general automatic parking algorithm mainly utilizes the parking space identification algorithm to identify typical perpendicular parking spaces and parallel parking spaces, and automatic parking in and out are performed according to the identified parking space types.

In a scenario of parking-out of a perpendicular or parallel parking space in the related art, a parking-out method is to calculate a relative posture of an end point position through a posture at the moment of triggering the parking-out, thereby achieving the parking-out of the perpendicular or parallel parking space.

However, for angled parking spaces, due to different angles of the parking spaces (45 degrees, 60 degrees, and the like), it is impossible to accurately acquire parking-out scenarios at different angles. The existing method of directly calculating the posture of the end point position according to the posture at the moment of triggering the parking-out may cause collisions or scratches with a vehicle parked in a parking space in a parking-out direction during the angled parking-out process, resulting in personal injuries and economic losses.

## SUMMARY

The present application provides a method and apparatus for parking out of an angled parking space, a vehicle, and a storage medium so that the problem of easily colliding or scratching with a vehicle parked in a parking space in the parking-out direction during the angled parking-out process can be solved, thereby improving the parking performance, ensuring the safety of drivers and passengers, and avoiding economic losses.

According to a first aspect of the present application, a method for parking out of an angled parking space is provided and applied to a current vehicle parked in a current angled parking space, where an obstruction vehicle is parked in an adjacent angled parking space on a side of the current angled parking space in a parking-out direction, and the method includes the steps below.

The current parking space coordinates of the current angled parking space and the current vehicle coordinates of the current vehicle are acquired.

A compensation auxiliary line of the current vehicle in the current angled parking space is determined, where the compensation auxiliary line is perpendicular to the longitudinal centerline of a vehicle body of the current vehicle and passes through a first parking space corner point of the current angled parking space, and the first parking space corner point is an endpoint of a parking-out parking space line of the current angled parking space in an opposite direction of the parking-out direction of the current angled parking space.

An interval distance between the current vehicle and the compensation auxiliary line is determined according to the current parking space coordinates and the current vehicle coordinates, and the interval distance is determined as a parking-out compensation distance of the current vehicle.

The current vehicle is controlled to move the parking-out compensation distance and then park out of the current angled parking space.

According to another aspect of the present application, an apparatus for parking out of an angled parking space is provided and applied to a current vehicle parked in a current angled parking space, where an obstruction vehicle is parked in an adjacent angled parking space on a side of the current angled parking space in a parking-out direction, and the apparatus includes a coordinate acquisition module, an auxiliary line determination module, a distance determination module, and a control module.

The coordinate acquisition module is configured to acquire the current parking space coordinates of the current angled parking space and the current vehicle coordinates of the current vehicle.

The auxiliary line determination module is configured to determine a compensation auxiliary line of the current vehicle in the current angled parking space, where the compensation auxiliary line is perpendicular to the longitudinal centerline of a vehicle body of the current vehicle and passes through a first parking space corner point of the current angled parking space, and the first parking space corner point is an obtuse parking space corner point formed by a parking-out parking space line of the current angled parking space.

The distance determination module is configured to determine an interval distance between the current vehicle and the compensation auxiliary line according to the current parking space coordinates and the current vehicle coordinates and determine the interval distance as a parking-out compensation distance of the current vehicle when parking out of the current angled parking space without colliding with the obstruction vehicle.

The control module is configured to control the current vehicle to move the parking-out compensation distance and then park out of the current angled parking space.

According to another aspect of the present application, a vehicle is provided. The vehicle includes at least one processor and a memory communicatively connected to the at least one processor.

The memory is configured to store at least one computer program executable by the at least one processor, and the at least one computer program is configured, when executed by the at least one processor, to cause the at least one processor to perform the method for parking out of an angled parking space according to any embodiment of the present application.

According to another aspect of the present application, a computer-readable storage medium is provided. The computer-readable storage medium stores computer instructions which, when executed by a processor, cause the processor to perform the method for parking out of an angled parking space according to any embodiment of the present application.

In the technical solutions of the embodiments of the present application, the current parking space coordinates of the current angled parking space and the current vehicle coordinates of the current vehicle are acquired; a compensation auxiliary line of the current vehicle in the current angled parking space is determined, where the compensation auxiliary line is perpendicular to the longitudinal centerline of a vehicle body of the current vehicle and passes through a first parking space corner point of the current angled parking space, and the first parking space corner point is an endpoint of a parking-out parking space line of the current angled parking space in an opposite direction of the parking-out direction of the current angled parking space; and an interval distance between the current vehicle and the compensation auxiliary line is determined according to the current parking space coordinates and the current vehicle coordinates, and the interval distance is determined as a parking-out compensation distance of the current vehicle. The parking-out compensation distance is able to make the current vehicle not collide with the obstruction vehicle during the process of parking out of the current angled parking space, and the current vehicle is controlled to move the parking-out compensation distance and then park out of the current angled parking space. The current vehicle moves a distance to basically align with the obstacle vehicle parked in the adjacent angled parking space on a side of the current angled parking space in a tilt direction, and then the current vehicle is controlled to pull out of the current angled parking space. In this manner, the problem of easily colliding or scratching with a vehicle parked in a parking space in the parking-out direction during the angled parking-out process can be solved, thereby improving the parking performance, ensuring the safety of drivers and passengers, and avoiding economic losses.

BRIEF DESCRIPTION OF DRAWINGS

To illustrate technical solutions in embodiments of the present application more clearly, drawings used in the description of the embodiments are briefly described below. Apparently, the drawings described below illustrate only part of the embodiments of the present application, and those of ordinary skill in the art may obtain other drawings based on the drawings described below on the premise that no creative work is done.

FIG. 1 is a flowchart of a method for parking out of an angled parking space according to embodiment one of the present application.

FIG. 2 is a schematic diagram of a scenario of parking out of an angled parking space.

FIG. 3 is a schematic diagram of the relative position relationship between adjacent angled parking spaces and adjacent vehicles.

FIG. 4 is a flowchart of a method for parking out of an angled parking space according to embodiment two of the present application.

FIG. 5 is a schematic diagram of the relative position between the current vehicle and the current angled parking space.

FIG. 6 is a flowchart of a method for parking out of an angled parking space according to embodiment three of the present application.

FIG. 7 is a schematic diagram of the target posture of the current vehicle in a scenario of parking out of an angled parking space.

FIG. 8 is a structural diagram of an apparatus for parking out of an angled parking space according to embodiment four of the present application.

FIG. 9 is a structural diagram of a vehicle for performing a method for parking out of an angled parking space according to the present application.

DETAILED DESCRIPTION

In order that solutions in the present application are better understood by those skilled in the art, the technical solutions in embodiments of the present application are clearly and completely described below in conjunction with drawings in the embodiments of the present application. Apparently, the described embodiments are part, not all, of the embodiments of the present application. Based on the embodiments of the present application, all other embodiments obtained by those of ordinary skill in the art without creative work should fall within the scope of the present application.

It is to be noted that the terms "first", "second", "third", "fourth", and the like in the description, claims, and drawings of the present application are used to distinguish between similar objects and are not necessarily used to describe a particular order or sequence. It is to be understood that data used in this manner are interchangeable where appropriate so that the embodiments of the present application described herein can be implemented in an order not illustrated or described herein. Additionally, terms "including" and "having" and any other variations thereof are intended to encompass a non-exclusive inclusion. For example, a process, method, system, product, or apparatus that includes a series of steps or units not only includes the expressly listed steps or units but may also include other steps or units that are not expressly listed or are inherent to such process, method, product, or apparatus.

Embodiment one

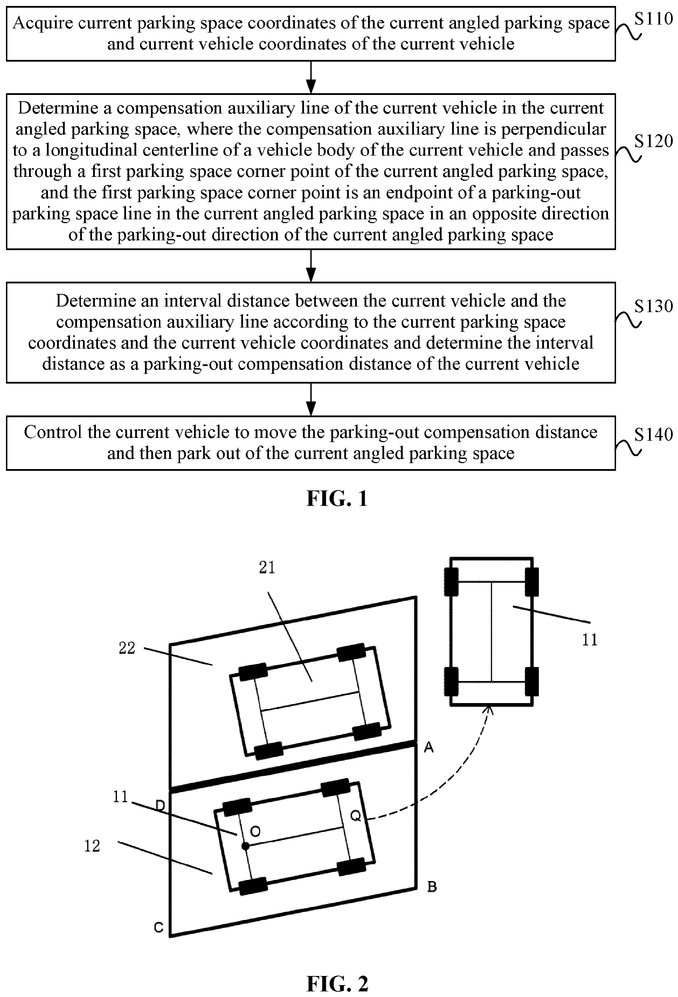

FIG. 1 is a flowchart of a method for parking out of an angled parking space according to embodiment one of the present application. This embodiment is applicable to the case where an obstruction vehicle is parked in an adjacent angled parking space on a side of the current angled parking space in a tilt direction and the current vehicle parked in the current angled parking space is controlled to park out. The method may be performed by an apparatus for parking out of an angled parking space. The apparatus for parking out of an angled parking space may be implemented in the form of hardware and/or software and may be configured in the current vehicle parked in the current angled parking space.

As shown in FIG. 1, the method includes the steps below.

In S110, the current parking space coordinates of the current angled parking space and the current vehicle coordinates of the current vehicle are acquired.

The current vehicle refers to the object controlled to park, that is, the vehicle that currently needs to be controlled to park. The current angled parking space refers to the angled parking space where the current vehicle is located. The current parking space coordinates refer to the coordinates of the current parking space and may include, for example, the coordinates of four corner points of the current angled parking space. The current vehicle coordinates refer to the coordinates of the current vehicle and may include, for example, the coordinates of four corner points and four wheels of the current vehicle. The coordinates of preset points on the vehicle such as the center point of the rear axle, the center point of the front axle, and the center point of the front end of the vehicle may be calculated. It is to be noted that the current parking space coordinates and the current vehicle coordinates should be in the same coordinate system.

For example, FIG. 2 is a schematic diagram of a scenario of parking out of an angled parking space. As shown in FIG. 2, a current vehicle 11 needs to park out of a current angled parking space 12, and an obstruction vehicle is parked in an adjacent angled parking space on a side of the current angled parking space 12 in a tilt direction (that is, on a side where point A is in FIG. 2). A reference coordinate system is constructed, and the current vehicle coordinates and the current parking space coordinates in the reference coordinate system are acquired. For example, the current vehicle coordinates are the coordinates of the center point O of the rear axle and the center point Q of the front end of the current vehicle, and the current parking space coordinates are the coordinates of the endpoints A, B, C, and D of the current angled parking space. For example, the world coordinate system may be a reference coordinate system constructed with a center point of the axle (such as the center point O of the rear axle) of the current vehicle 11 in the initial state before parking out as an origin and the longitudinal centerline of the vehicle (that is, the line between the center point O of the rear axle and the center point Q of the front end of the vehicle) as the X-axis. Alternatively, the world coordinate system may be a reference coordinate system constructed with point C of the current angled parking space as the origin and the parking space line BC as the X-axis.

It is to be understood that other reference coordinate systems may be selected according to actual requirements. A suitable world coordinate system is selected so that the computational complexity of subsequent calculations can be simplified.

Specifically, the manner of acquiring the current vehicle coordinates may be the following: acquiring and memorizing the current vehicle coordinates of the current vehicle in the reference coordinate system when the current vehicle parks in the current angled parking space, and acquiring the memorized current vehicle coordinates when the current vehicle parks out. The manner of acquiring the current parking space coordinates may be the following: acquiring the map coordinates of the current parking space by using the Global Positioning System (GPS) positioning and a map of the angled parking space; and converting the map coordinates of the current parking space into the reference coordinate system to obtain the current parking space coordinates of the current parking space in the reference coordinate system.

In this step, the purpose of acquiring the current parking space coordinates of the current angled parking space and the current vehicle coordinates of the current vehicle is to determine the relative position relationship between the current vehicle and the current parking space to determine, according to the relative position relationship between the current vehicle and the current parking space, the distance that needs to be compensated when the current vehicle is controlled to park out.

In S120, a compensation auxiliary line of the current vehicle in the current angled parking space is determined, where the compensation auxiliary line is perpendicular to the longitudinal centerline of a vehicle body of the current vehicle and passes through a first parking space corner point of the current angled parking space, and the first parking space corner point is an endpoint of a parking-out parking space line of the current angled parking space in an opposite direction of the parking-out direction of the current angled parking space.

The longitudinal centerline of the vehicle body is the line between the center point of the rear axle and the center point of the front axle (or the center point of the front end of the vehicle) of the current vehicle. The compensation auxiliary line may be understood as an auxiliary line drawn to determine the parking-out compensation distance. The parking-out parking space line is the parking space line of the current angled parking space in the parking direction of the current vehicle, and the first parking space corner point is the obtuse parking space corner point formed by the parking-out parking space line of the current angled parking space. For example, in the scenario of parking out of the angled parking space shown in FIG. 2, the parking-out parking space line is the parking space line AB, the parking-out direction of the current angled parking space is a side where the endpoint A of the parking-out parking space line is, and the first parking space corner point is the endpoint B of the parking-out parking space line AB in the current angled parking space in the opposite direction of the parking-out direction, that is, the parking space corner point B is the first parking space corner point.

Specifically, a straight line that passes through the first parking space corner point of the current angled parking space and is perpendicular to the longitudinal centerline of the vehicle body of the current vehicle is drawn (or a straight line that passes through the first parking space corner point of the current angled parking space and is parallel to the longitudinal centerline of the vehicle body of the current vehicle is drawn), and the straight line is used as the compensation auxiliary line of the current vehicle in the current angled parking space.

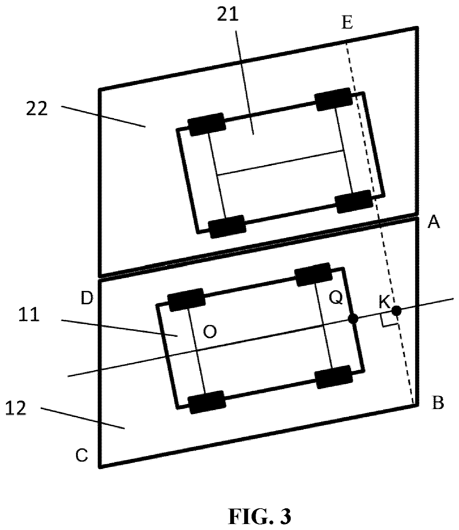

For example, FIG. 3 is a schematic diagram of the relative position relationship between adjacent angled parking spaces and vehicles. FIG. 3 shows the current angled parking space 12 and the current vehicle 11, a straight line that passes through the first parking space corner point B of the current angled parking space 12 and is perpendicular to the longitudinal centerline OQ of the vehicle body of the current vehicle 11 is drawn, and the straight line has a vertical point K on the longitudinal centerline OQ of the vehicle body (or the extension line of the longitudinal centerline OQ of the vehicle body), thereby determining the straight line BK as the compensation auxiliary line of the current vehicle 11 in the current angled parking space 12.

As can be seen from FIG. 3, the parking-out auxiliary line BK is basically aligned with the front end of an obstacle vehicle 21 placed in an adjacent angled parking space 22. In this step, the compensation auxiliary line of the current vehicle in the current angled parking space is set so that the distance between the front end of the current vehicle and the front end of the obstacle vehicle can be conveniently and simply determined, thereby determining the distance that the current vehicle needs to compensate when parking out of the current angled parking space.

In S130, an interval distance between the current vehicle and the compensation auxiliary line is determined according to the current parking space coordinates and the current vehicle coordinates, and the interval distance is determined as a parking-out compensation distance of the current vehicle.

The parking-out compensation distance refers to the distance that the current vehicle needs to compensate when controlled to park out and may be understood as the distance that the current vehicle needs to move in the parking-out direction before controlled to park out in order to avoid collisions with the obstacle vehicle.

Specifically, the interval distance between the current vehicle and the compensation auxiliary line is determined as the parking-out compensation distance of the current vehicle. Since the front end direction of the current vehicle is perpendicular to the compensation auxiliary line, the interval distance between any point on the front end of the current vehicle and the compensation auxiliary line is the same. Therefore, the interval distance between any point on the front end of the current vehicle and the compensation auxiliary line may be considered as the parking-out compensation distance of the current vehicle. For the convenience of calculation, as shown in FIG. 3, in the embodiment of the present application, the interval distance KQ between the center point Q of the front end of the current vehicle 11 and the compensation auxiliary line BK is used as the parking-out compensation distance of the current vehicle.

For example, as shown in FIG. 3, the manner of determining the parking-out compensation distance KQ may be the following: acquiring the coordinates of the center point Q of the front end of the vehicle and the coordinates of the vertical point K on the longitudinal centerline OQ of the vehicle body (or the extension line of the longitudinal centerline OQ of the vehicle body) and determining the parking-out compensation distance KQ according to the coordinates of the center point Q of the front end of the vehicle and the coordinates of the vertical point K. Alternatively, the parking-out compensation distance KP may be obtained in a plane geometry solution method according to a geometric figure formed by the coordinates of the corner points A, B, C, and D of the current parking space, the center point O of the rear axle, the center point Q of the front end of the vehicle, and the vertical point K in FIG. 3. Multiple specific plane geometry solution methods may exist and are not limited to the embodiments of the present application.

In this step, the parking-out compensation distance of the current vehicle can be calculated simply by using the interval distance between the current vehicle and the set compensation auxiliary line as the parking-out compensation distance.

In S140, the current vehicle is controlled to move the parking-out compensation distance and then park out of the current angled parking space.

For example, the manner of controlling the current vehicle to move the parking-out compensation distance and then park out of the current angled parking space may be controlling the current vehicle to move the parking-out compensation distance and then park out according to a memorized parking-in path on which the current vehicle parks in the current angled parking space or may be obtaining a planned parking-out path for the current vehicle through planning according to the posture of the current vehicle after moving the parking-out compensation distance and the estimated posture of the current vehicle after parking out of the current angled parking space and controlling the current vehicle to park out of the current angled parking space according to the planned parking-out path.

In this step, after the current vehicle is compensated with the parking-out compensation distance to move to a position at which the current vehicle is basically aligned with the obstacle vehicle placed in the adjacent angled parking space, the current vehicle is controlled to park out of the current angled parking space. In this manner, in the process of the current vehicle parking out of the current angled parking space, the following case can be avoided: the current vehicle collides with or scratches the obstacle vehicle parked in the adjacent angled parking space on a side of the current angled parking space in the tilt direction due to a certain turning angle.

In the technical solutions of the embodiments of the present application, the current parking space coordinates of the current angled parking space and the current vehicle coordinates of the current vehicle are acquired; a compensation auxiliary line of the current vehicle in the current angled parking space is determined, where the compensation auxiliary line is perpendicular to the longitudinal centerline of a vehicle body of the current vehicle and passes through a first parking space corner point of the current angled parking space, and the first parking space corner point is an endpoint of a parking-out parking space line of the current angled parking space in an opposite direction of the parking-out direction of the current angled parking space; and an interval distance between the current vehicle and the compensation auxiliary line is determined according to the current parking space coordinates and the current vehicle coordinates, and the interval distance is determined as a parking-out compensation distance of the current vehicle. The parking-out compensation distance is able to make the current vehicle not collide with the obstruction vehicle during the process of parking out of the current angled parking space, and the current vehicle is controlled to move the parking-out compensation distance and then park out of the current angled parking space. The current vehicle moves a distance to basically align with the obstacle vehicle parked in the adjacent angled parking space on a side of the current angled parking space in a tilt direction, and then the current vehicle is controlled to pull out of the current angled parking space. In this manner, the problem of easily colliding or scratching with a vehicle parked in a parking space in the parking-out direction during the angled parking-out process can be solved, thereby improving the parking performance, ensuring the safety of drivers and passengers, and avoiding economic losses.

Embodiment two

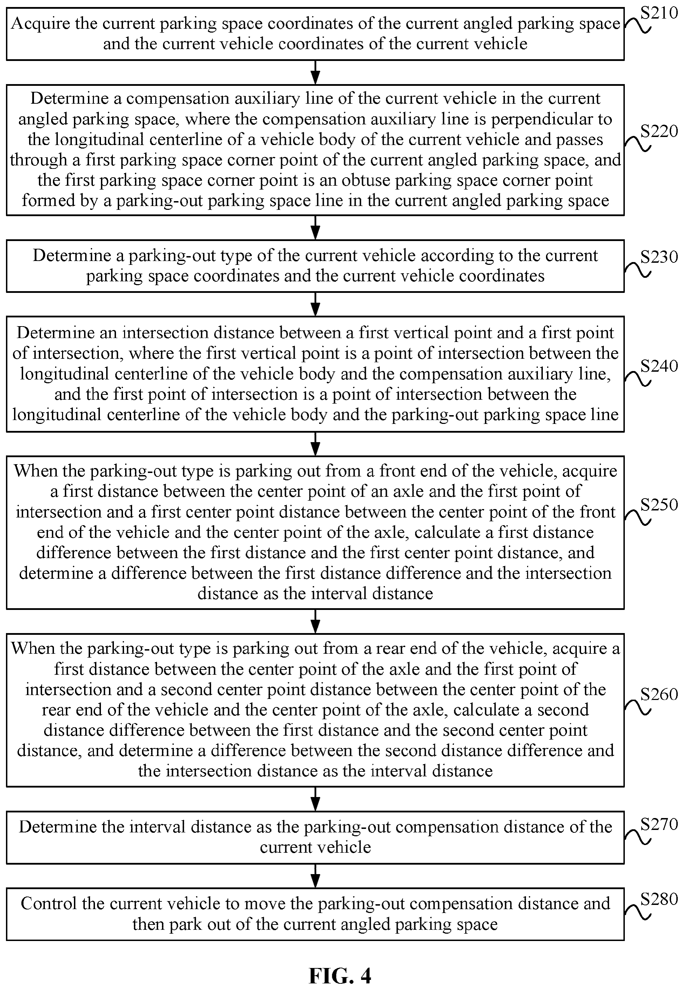

FIG. 4 is a flowchart of a method for parking out of an angled parking space according to embodiment two of the present application. This embodiment further limits the manner of determining "the parking-out compensation distance of the current vehicle" in the preceding embodiment. As shown in FIG. 4, the method includes the steps below.

In S210, the current parking space coordinates of the current angled parking space and the current vehicle coordinates of the current vehicle are acquired.

In S220, a compensation auxiliary line of the current vehicle in the current angled parking space is determined, where the compensation auxiliary line is perpendicular to the longitudinal centerline of a vehicle body of the current vehicle and passes through a first parking space corner point of the current angled parking space, and the first parking space corner point is an obtuse parking space corner point formed by a parking-out parking space line of the current angled parking space.

In S230, a parking-out type of the current vehicle is determined according to the current parking space coordinates and the current vehicle coordinates.

The parking-out type of the current vehicle may include parking out from a front end of the vehicle and parking out from a rear end of the vehicle. Parking out from the front end of the vehicle refers to that the front end of the vehicle faces the parking-out direction of the current angled parking space when the current vehicle parks out. Parking out from the rear end of the vehicle refers to that the rear end of the vehicle faces the parking-out direction of the current angled parking space when the current vehicle parks out.

For example, the manner of determining the parking-out type of the current vehicle according to the current parking space coordinates and the current vehicle coordinates may be the following: determining the front end direction of the vehicle according to the current parking space coordinates and the current vehicle coordinates; and determining the parking-out type of the current vehicle according to the front end direction of the vehicle and the parking-in direction and parking-out direction of the current angled parking space. Specifically, if the front end direction of the current vehicle is consistent with the parking-out direction, then the current parking-out type is determined as parking out from the front end of the vehicle; and if the front end direction of the current vehicle is consistent with the parking-in direction, then the current parking-out type is determined as parking out from the rear end of the vehicle. Alternatively, the manner of determining the parking-out type of the current vehicle according to the current parking space coordinates and the current vehicle coordinates may be the following: determining the rear end direction of the vehicle according to the current parking space coordinates and the current vehicle coordinates; and determining the parking-out type of the current vehicle according to the rear end direction of the vehicle and the parking-in direction and parking-out direction of the current angled parking space. Specifically, if the rear end direction of the current vehicle is consistent with the parking-out direction, then the current parking-out type is determined as parking out from the rear end of the vehicle; and if the rear end direction of the current vehicle is consistent with the parking-in direction, then the current parking-out type is determined as parking out from the front end of the vehicle.

In S240, an intersection distance between a first vertical point and a first point of intersection is determined, where the first vertical point is a point of intersection between the longitudinal centerline of the vehicle body and the compensation auxiliary line, and the first point of intersection is a point of intersection between the longitudinal centerline of the vehicle body and the parking-out parking space line.

Since the longitudinal centerline of the vehicle body is perpendicular to the compensation auxiliary line, the first vertical point is a point of intersection between the longitudinal centerline of the vehicle body (or the extension line of the longitudinal centerline of the vehicle body) and the compensation auxiliary line. The first point of intersection is a point of intersection between the longitudinal centerline of the vehicle body (or the extension line of the longitudinal centerline of the vehicle body) and the parking-out parking space line.

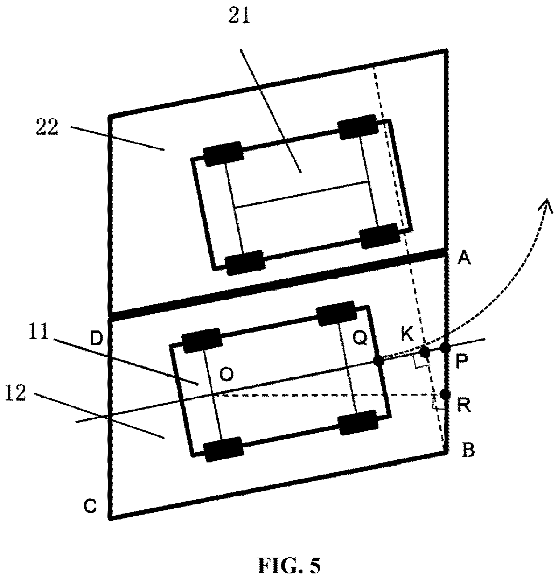

Specifically, FIG. 5 is a schematic diagram of the relative position between the current vehicle and the current angled parking space. As shown in FIG. 5, the point K of intersection between the longitudinal centerline OQ of the vehicle body and the compensation auxiliary line BK is on the extension line of the longitudinal centerline OQ of the vehicle body, that is, the first vertical point is point K. The first point of intersection is the point P of intersection between the extension line of the longitudinal centerline OQ of the vehicle body and the parking-out parking space line AB. Then, the intersection distance is the length of KP.

In S250, when the parking-out type is parking out from a front end of the vehicle, a first distance between the center point of an axle and the first point of intersection and a first center point distance between the center point of the front end of the vehicle and the center point of the axle are acquired, a first distance difference between the first distance and the first center point distance is calculated, and a difference between the first distance difference and the intersection distance is determined as the interval distance.

Specifically, two cases may exist when the vehicle parks out: parking out from the front end of the vehicle and parking out from the rear end of the vehicle. As shown in FIG. 5, the interval distance KQ = QP - KP, and QP = OP - OQ (or QP = O'P - O'Q), where point O or point O' denotes the center point of the front axle or the center point of the rear axle of the vehicle. If the parking-out type of the current vehicle shown in FIG. 5 is parking out from the front end of the vehicle, point Q denotes the center point of the front end of the vehicle, the first distance OP (or O'P) is the distance between the center point O (or O') of the axle and the first point P of intersection, and the first center point distance OQ (or O'Q) is the distance between the center point O (or O') of the axle and the center point Q of the front end of the vehicle. Therefore, the first distance difference QP is the difference between the first distance OP (or O'P) and the first center point distance OQ (or O'Q), the interval distance is the difference between the first distance difference QP and the intersection distance KP, and the interval distance between the center point of the front end of the vehicle and the compensation auxiliary line may be used for representing the interval distance between the current vehicle and the compensation auxiliary line.

In S260, when the parking-out type is parking out from a rear end of the vehicle, a first distance between the center point of the axle and the first point of intersection and a second center point distance between the center point of the rear end of the vehicle and the center point of the axle are acquired, a second distance difference between the first distance and the second center point distance is calculated, and a difference between the second distance difference and the intersection distance is determined as the interval distance.

If the parking-out type of the current vehicle shown in FIG. 5 is parking out from the front end of the vehicle, point Q denotes the center point of the rear end of the vehicle, the first distance OP (or O'P) is the distance between the center point O (or O') of the axle and the first point P of intersection, and the second center point distance OQ (or O'Q) is the distance between the center point O (or O') of the axle and the center point Q of the rear end of the vehicle. Therefore, the second distance difference QP is the difference between the first distance OP (or O'P) and the second center point distance OQ (or O'Q), the interval distance between the center point of the rear end of the vehicle and the compensation auxiliary line is the difference between the second distance difference QP and the intersection distance KP, and the interval distance between the center point of the rear end of the vehicle and the compensation auxiliary line may be used for representing the interval distance between the current vehicle and the compensation auxiliary line.

In S270, the interval distance is determined as the parking-out compensation distance of the current vehicle.

Specifically, in a scenario where the parking-out type of the current vehicle is parking out from the front end of the vehicle, the calculated interval distance between the center point of the front end of the current vehicle and the compensation auxiliary line is the parking-out compensation distance of the current vehicle. In a scenario where the parking-out type of the current vehicle is parking out from the rear end of the vehicle, the calculated interval distance between the center point of the rear end of the current vehicle and the compensation auxiliary line is the parking-out compensation distance of the current vehicle.

In S280, the current vehicle is controlled to move the parking-out compensation distance and then park out of the current angled parking space.

In the technical solutions of the embodiments of the present application, the current parking space coordinates of the current angled parking space and the current vehicle coordinates of the current vehicle are acquired; a compensation auxiliary line of the current vehicle in the current angled parking space is determined, where the compensation auxiliary line is perpendicular to the longitudinal centerline of a vehicle body of the current vehicle and passes through a first parking space corner point of the current angled parking space, and the first parking space corner point is an endpoint of a parking-out parking space line of the current angled parking space in an opposite direction of the parking-out direction of the current angled parking space; the interval distance between the current vehicle and the compensation auxiliary line is determined according to the current parking space coordinates, the current vehicle coordinates, and the parking-out type of the current vehicle, and the interval distance is determined as the parking-out compensation distance of the current vehicle; and the current vehicle is controlled to move the parking-out compensation distance and then park out of the current angled parking space. The current vehicle moves a distance to basically align with the obstacle vehicle parked in the adjacent angled parking space on a side of the current angled parking space in a tilt direction, and then the current vehicle is controlled to pull out of the current angled parking space. In this manner, the problem of easily colliding or scratching with a vehicle parked in a parking space in the parking-out direction during the angled parking-out process can be solved, thereby improving the parking performance, ensuring the safety of drivers and passengers, and avoiding economic losses.

In step S240 of determining the intersection distance between the first vertical point and the first point of intersection as shown in FIG. 5, since the first vertical point K and the first point P of intersection are neither feature points on the parking space lines of the current angled parking space (such as the parking space corner points or parking space line center points) nor feature points on the vehicle (such as axle center points, the center point of the front/rear end of the vehicle, or vehicle corner points), it is difficult to accurately acquire the coordinates of the first vertical point K and the coordinates of the first point P of intersection based on the current parking space coordinates of the current angled parking space and the current vehicle coordinates of the current vehicle, and it is difficult to determine the intersection distance between the first vertical point K and the first point P of intersection through the coordinates of the first vertical point K and the coordinates of the first point P of intersection.

Point K is the vertical point between the compensation auxiliary line KB and the longitudinal centerline OQ of the vehicle body of the current vehicle, and ΔPKB is a right triangle. Therefore, according to the trigonometric function relationship of the right triangle, the length of the right-angled side PK of △PKB may be determined, that is, the intersection distance between the first vertical point and the first point of intersection is obtained.

Moreover, when the vehicle parks in the current angled parking space, a repositioning line function is generally implemented to straighten out the vehicle body of the current vehicle, that is, it may be considered that the current vehicle is basically parallel to the current angled parking space. In the case where the current vehicle is parallel to the current angled parking space, the longitudinal centerline of the vehicle body is parallel to the parking spaces on two sides of the current angled parking space, that is, the compensation auxiliary line is perpendicular to the longitudinal centerline of the vehicle body. Therefore, in an optional embodiment, S240 in which the intersection distance between the first vertical point and the first point of intersection is determined includes the steps below.

In S2421, coordinates of a second parking space corner point and a cosine value of a second parking space angle are determined according to the current parking space coordinates, where the second parking space corner point is an endpoint of the parking-out parking space line of the current angled parking space in the parking-out direction of the current angled parking space.

As shown in FIG. 5, the parking-out direction is set to the side where point A is, the second parking space corner point is the endpoint A of the parking-out parking space line AB in the current angled parking space 12 in the parking-out direction of the current angled parking space, the coordinates of the second parking space corner point are shown as A($A_x$, $A_y$), the second parking space angle is ∠BAD, and the cosine value of the second parking space angle is cos∠BAD.

Specifically, the step of determining the coordinates of the second parking space corner point A and the cosine value of the second parking space angle according to the current parking space coordinates includes acquiring the coordinates of the parking space corner points A, B, and D in the current angled parking space, including A ($A_x$, $A_y$), B ($B_x$,

$B_y$), and D ($D_x$, $D_y$); and based on the coordinates of the parking space corner points A, B, and D, determining

$$\overrightarrow{AB} = (B_x\text{-}A_x, B_y\text{-}A_y) \text{ and } \overrightarrow{AD} = (D_x\text{-}A_x, D_y\text{-}A_y).$$

In this manner, $\cos\angle BAD = \dfrac{\overrightarrow{AB}\times\overrightarrow{AD}}{|\overrightarrow{AB}|\times|\overrightarrow{AD}|} = \dfrac{(B_x-A_x)(D_x-A_x)+(B_y-A_y)(D_y-A_y)}{\sqrt{[(B_x-A_x)^2+(B_y-A_y)^2]\times[(D_x-A_x)^2+(D_y-A_y)^2]}}.$

In S2422, coordinates of a second vertical point on a second perpendicular line are determined according to the current parking space coordinates and the current vehicle coordinates, where the second perpendicular line is a line segment from the center point of the axle of the current vehicle to the parking-out parking space line of the current angled parking space, and the second vertical point is a point of intersection of the second perpendicular line and the parking-out parking space line.

As shown in FIG. 5, a line segment that passes through the center point O of the axle (the center point of the front axle or the center point of the rear axle) of the current vehicle and is perpendicular to the parking-out parking space line AB of the current angled parking space is drawn to obtain the second perpendicular line OR, and the point of intersection between the second perpendicular line OR and the parking-out parking space line AB is the second vertical point R. Since the coordinates of points A, B, and O are known, that is, A ($A_x$, $A_y$), B ($B_x$, $B_y$), and O($O_x$, $O_y$), the coordinates R($R_x$, $R_y$) of the second vertical point are obtained through geometric calculation according to $\overrightarrow{OR} \perp \overrightarrow{AB}$. The geometric calculation method for the coordinates of the second vertical point R specifically includes: calculating vectors:

$$\overrightarrow{OR} = (R_x\text{-}O_x, R_y\text{-}O_y), \overrightarrow{AB} = (B_x\text{-}A_x, B_y\text{-}A_y),$$ and $\overrightarrow{AR} = (R_x\text{-}A_x, R_y\text{-}A_y)$; based on the vector

perpendicular relationship $\overrightarrow{OR}\perp\overrightarrow{AB}$, obtaining $(R_x\text{-}O_x)\times(B_x\text{-}A_x) + (R_y\text{-}O_y)\times(B_y\text{-}A_y) = 0$; and on the basis of that point R is on the straight line AB and the vectors $\overrightarrow{AR}$ and $\overrightarrow{AB}$ are collinear, the following is obtained.

$$\frac{R_x-A_x}{B_x-A_x} = \frac{R_y-A_y}{B_y-A_y} = k,$$

where $k = -\dfrac{(R_x-O_x)\times(B_x-A_x)+(R_y-O_y)\times(B_y-A_y)}{(B_x-A_x)^2+(B_y-A_y)^2}$.

The coordinates of point R may be expressed as $\begin{cases} R_x = k(B_x - A_x) + A_x \\ R_y = k(B_y - A_y) + A_y \end{cases}$.

The slope k is substituted into the coordinate expression of point R so that the coordinates ($R_x$, $R_y$) of the foot R of the perpendicular line can be calculated.

In S2423, a second distance between the second parking space corner point and the second vertical point is determined according to the coordinates of the second parking space corner point and the coordinates of the second vertical point on the parking-out parking space line.

Specifically, as shown in FIG. 5, the second distance is the length of the line segment AR between the second parking space corner point A and the second vertical point R. In the case where the coordinates A($A_x$, $A_y$) of the second parking space corner point and the coordinates R($R_x$, $R_y$) of the second vertical point are known, the second distance between the second parking space corner point A and the second vertical point R is calculated as the following.

$$\mathrm{AR} = \sqrt{(A_x - R_x)^2 + (A_y - R_y)^2}.$$

In S2424, a third distance between the center point of the axle and the second vertical point is determined according to coordinates of the center point of the axle and the coordinates of the second vertical point.

Specifically, as shown in FIG. 5, the third distance is the length of the line segment OR between the center point O of the axle and the second vertical point R. In the case where the coordinates O($O_x$, $O_y$) of the center point of the axle and the coordinates R($R_x$, $R_y$) of the second vertical point are known, the second distance between the center point O of the axle and the second vertical point R is calculated as the following.

$$OR = \sqrt{(O_x - R_x)^2 + (O_y - R_y)^2}.$$

In S2425, based on theorems in plane geometry, the intersection distance between the first vertical point and the first point of intersection is determined according to the second distance, the third distance, and the cosine value of the second parking space angle.

Specifically, as shown in FIG. 5, the first vertical point K may also be referred to as the point of intersection between the longitudinal centerline of the vehicle body and the compensation auxiliary line. Therefore, the distance between the first vertical point K and the first point P of intersection is the intersection distance, that is, the intersection distance is the length of the line segment KP between the first vertical point K and the first point P of intersection.

As shown in FIG. 5, KP denotes the adjacent right-angled side of ∠BPK in the right triangle △PKB; since the current vehicle is parked in the current angled parking space such that the vehicle body is parallel to two sides of the current angled parking space, ∠BPK = ∠BAD, that is, ∠BPK is equal to the second parking space angle; RP denotes the adjacent right-angled side of ∠BPK in the right triangle △ORP. In this manner, the following is obtained.

$$KP = BP \times \cos\angle BAD$$

$$= (BR + RP) \times \cos\angle BAD$$

$$= BR \times \cos\angle BAD + RP \times \cos\angle BAD$$

$$= BR \times \cos\angle BAD + \frac{OR}{\tan\angle BAD} \times \cos\angle BAD$$

$$= BR \times \cos\angle BAD + \frac{OR}{\sin\angle BAD} \times [\cos\angle BAD]^2.$$

Optionally, the step of acquiring the first distance between the center point of the axle and the first point of intersection includes the step below.

Based on the theorems in plane geometry, the first distance between the center point of the axle and the first point of intersection is determined according to the third distance and the cosine value of the second parking space angle.

Specifically, although the coordinates of the first point P of intersection are unknown, the first distance OP is the adjacent right-angled side of ∠OPR in the right triangle △ORP, and ∠PR = ∠BPK = ∠BAD, that is, ∠OPR is equal to the second parking space angle. In this manner, according to the third distance OR and the cosine value cos∠BAD of the second parking space angle, the first distance OP between the center point O of the axle and the first point P of intersection is obtained as follows.

$$OP = \frac{OR}{\sin\angle OPR} = \frac{OR}{\sin\angle BAD} = \frac{OR}{\sqrt{1-(\cos\angle BAD)^2}}.$$

In this manner, in this optional embodiment, the compensation distance is as follows.

$$KQ = QP - KP = OP - OQ - KP$$

$$= \frac{OR}{\sin\angle BAD} - \sqrt{(Q_x - O_x)^2 + (Q_y - O_y)^2} - BR \times \cos\angle BAD - \frac{OR}{\sin\angle BAD} \times [\cos\angle BAD]^2.$$

Embodiment three

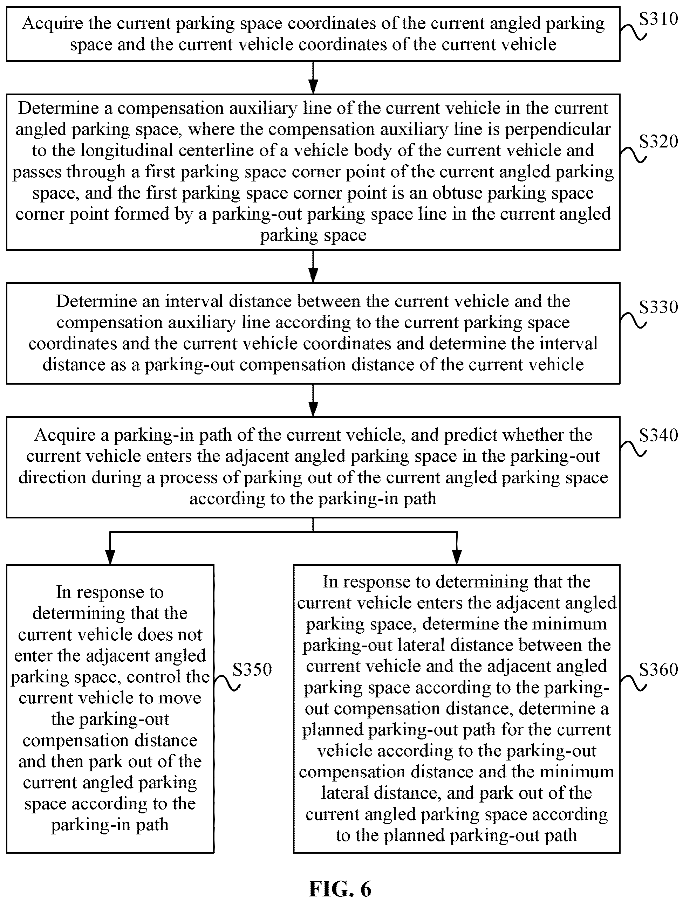

FIG. 6 is a flowchart of a method for parking out of an angled parking space according to embodiment three of the present application. This embodiment further limits the manner of "parking out of the current angled parking space" in the preceding embodiments. As shown in FIG. 6, the method includes the steps below.

In S310, the current parking space coordinates of the current angled parking space and the current vehicle coordinates of the current vehicle are acquired.

In S320, a compensation auxiliary line of the current vehicle in the current angled parking space is determined, where the compensation auxiliary line is perpendicular to the longitudinal centerline of a vehicle body of the current vehicle and passes through a first parking space corner point of the current angled parking space, and the first parking space corner point is an endpoint of a parking-out parking space line of the current angled parking space in an opposite direction of the parking-out direction of the current angled parking space.

In S330, an interval distance between the current vehicle and the compensation auxiliary line is determined according to the current parking space coordinates and the current vehicle coordinates, and the interval distance is determined as a parking-out compensation distance of the current vehicle.

In S340, a parking-in path of the current vehicle is acquired, and whether the current vehicle enters the adjacent angled parking space in the parking-out direction during a process of parking out of the current angled parking space according to the parking-in path is predicted.

The parking-in path may be understood as the path used and memorized by the current vehicle when the current vehicle parks in the current angled parking space.

Specifically, the positions of the current vehicle at path points on the parking-in path during the process of the current vehicle parking out of the current angled parking space according to the parking-in path are acquired, and the positions of the current vehicle at path points are compared with the current parking space coordinates of the current angled parking space and the coordinates of the adjacent parking space in the parking-out direction to determine whether the current vehicle crosses the current parking space and enters the adjacent angled parking space in the parking-out direction during the process of parking out of the current angled parking space according to the parking-in path, thereby predicting whether the current vehicle may collide with the obstacle vehicle during the process of parking out of the current angled parking space according to the parking-in path.

In S350, in response to determining that the current vehicle does not enter the adjacent angled parking space, the current vehicle is controlled to move the parking-out compensation distance and then park out of the current angled parking space according to the parking-in path.

Specifically, if the current vehicle does not enter the adjacent angled parking space in the parking-out direction during the process of parking out of the current angled parking space according to the parking-in path, it means that the current vehicle does not collide with the obstacle vehicle parked in the adjacent angled parking space during the process of parking out of the current angled parking space according to the parking-in path. Therefore, the current vehicle may be controlled to move the parking-out compensation distance and then park out of the current angled parking space according to the parking-in path.

In S360, in response to determining that the current vehicle enters the adjacent angled parking space, the minimum parking-out lateral distance between the current vehicle and the adjacent angled parking space is determined according to the parking-out compensation distance, a planned parking-out path for the current vehicle is determined according to the parking-out compensation distance and the minimum lateral distance, and the current vehicle parks out of the current angled parking space according to the planned parking-out path.

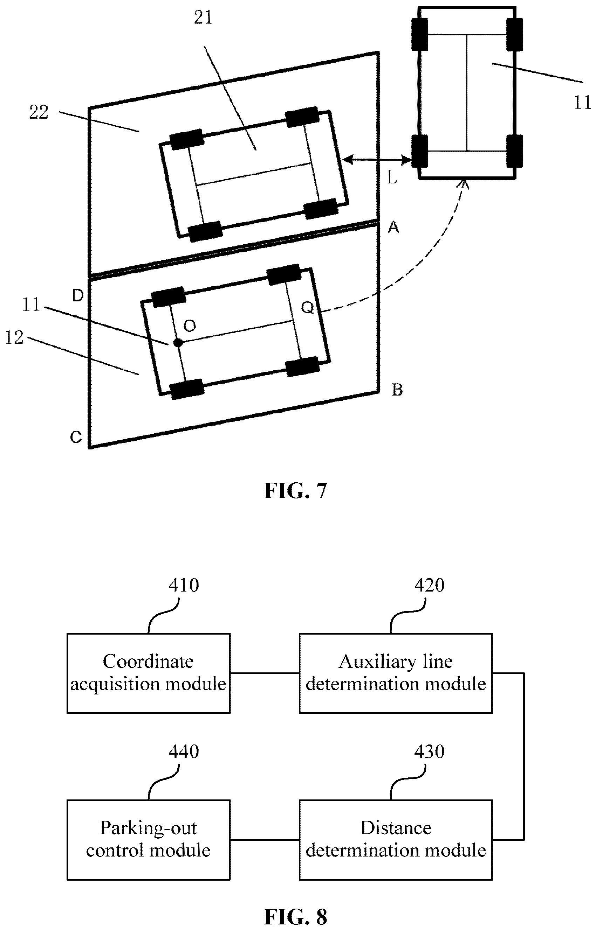

The minimum parking-out lateral distance is the minimum value of the lateral distance between the current vehicle and the obstacle vehicle parked in the adjacent angled parking space to ensure that the current vehicle does not collide with the obstacle vehicle parked in the adjacent angled parking space during the parking-out process. FIG. 7 is a schematic diagram of the target posture of the current vehicle in a scenario of parking out of an angled parking space. The distance L shown in FIG. 7 is the minimum parking-out lateral distance.

Specifically, if the current vehicle enters the adjacent angled parking space in the parking-out direction during the process of parking out of the current angled parking space according to the parking-in path, it means that the current vehicle might collide with the obstacle vehicle parked in the adjacent angled parking space during the process of parking out of the current angled parking space according to the parking-in path. Therefore, after moving the parking-out compensation distance, the current vehicle may not be controlled to directly park out of the current angled parking space according to the parking-in path. The planned parking-out path needs to be re-determined.

The main idea of determining the planned parking-out path is to acquire the initial posture in the initial parking-out state and the target posture in the parking-out completion state and determine the planned parking-out path according to the initial posture and the target posture. The initial posture in the initial parking-out state is the posture of the current vehicle after moving the parking-out compensation distance. The target posture is the posture when the distance between the current vehicle and the obstacle vehicle parked in the adjacent angled parking space is the minimum parking-out measurement distance. The minimum parking-out measurement distance may be calculated according to the parking-out compensation distance.

Optionally, the step of determining the minimum parking-out lateral distance between the current vehicle and the adjacent angled parking space according to the parking-out compensation distance includes the steps below.

When the parking-out compensation distance is less than or equal to a calibration distance, the sum of the parking-out compensation distance and the calibration distance is determined as the minimum parking-out lateral distance.

When the parking-out compensation distance is greater than the calibration distance, the calibration distance is determined as the minimum parking-out lateral distance. To ensure that the current vehicle does not collide with the obstacle vehicle parked in the adjacent angled parking space during the parking-out process, the minimum parking-out lateral distance should not be too small. However, at the same time, to minimize the parking-out distance of the current vehicle to reduce the interference with the vehicle on the road outside the parking space or the oncoming vehicle, the minimum parking-out lateral distance is not necessarily the larger the better. Therefore, the minimum parking-out lateral distance is determined by comparing the parking-out compensation distance and the calibration distance. The specific manner is as follows: if the parking-out compensation distance is less than or equal to the calibration distance, the sum of the parking-out compensation distance and the calibration distance is determined as the minimum parking-out lateral distance; and if the parking-out compensation distance is greater than the calibration distance, the calibration distance is determined as the minimum parking-out lateral distance.

In the technical solutions of the embodiments of the present application, the current parking space coordinates of the current angled parking space and the current vehicle coordinates of the current vehicle are acquired; a compensation auxiliary line of the current vehicle in the current angled parking space is determined, where the compensation auxiliary line is perpendicular to the longitudinal centerline of a vehicle body of the current vehicle and passes through a first parking space corner point of the current angled parking space, and the first parking space corner point is an endpoint of a parking-out parking space line of the current angled parking space in an opposite direction of the parking-out direction of the current angled parking space; an interval distance between the current vehicle and the compensation auxiliary line is determined according to the current parking space coordinates and the current vehicle coordinates, and the interval distance is determined as a parking-out compensation distance of the current vehicle; a parking-in path of the current vehicle is acquired, and whether the current vehicle collides with the obstruction vehicle during the process of parking out of the current angled parking space according to the parking-in path is predicted; and if the current vehicle collides with the obstruction vehicle, the minimum lateral distance between the current vehicle and the obstacle vehicle when the vehicle completes parking out is estimated according to the parking-out compensation distance, the planned parking-out path for the current vehicle is determined according to the minimum lateral distance, and the current vehicle parks out of the current angled parking space according to the planned parking-out path. In this manner, the vehicle in the current angled parking space does not collide with the vehicle in the adjacent parking space when parking out, thereby improving the parking performance, ensuring the safety of drivers and passengers, and avoiding economic losses.

Optionally, the step of determining the planned parking-out path for the current vehicle according to the minimum lateral distance and the parking-out compensation distance includes the steps below.

A target posture of the current vehicle when the current vehicle is parallel to the parking-out parking space line of the current angled parking space and the distance between the current vehicle and the adjacent angled parking space satisfies the minimum parking-out lateral distance is predicted.

An initial posture of the current vehicle after the current vehicle moves the parking-out compensation distance is acquired.

The planned parking-out path for the current vehicle is determined according to the initial posture and the target posture.

Specifically, when the current vehicle is parallel to the parking-out parking space line of the current angled parking space, it may be considered that the current vehicle completes parking out. At this time, the lateral distance between the current vehicle and the obstacle vehicle parked in the adjacent angled parking space needs to be acquired, and the posture when the lateral distance is the minimum parking-out lateral distance is determined as the target posture of the current vehicle. The posture of the current vehicle after moving the parking-out compensation distance is determined as the initial posture, and the planned parking-out path for the current vehicle may be obtained by performing path planning according to the initial posture and the target posture.

Embodiment four

FIG. 8 is a structural diagram of an apparatus for parking out of an angled parking space according to embodiment four of the present application. As shown in FIG. 8, the apparatus includes a coordinate acquisition module 410, an auxiliary line determination module 420, a distance determination module 430, and a parking-out control module 440.

The coordinate acquisition module 410 is configured to acquire the current parking space coordinates of the current angled parking space and the current vehicle coordinates of the current vehicle.

The auxiliary line determination module 420 is configured to determine a compensation auxiliary line of the current vehicle in the current angled parking space, where the compensation auxiliary line is perpendicular to the longitudinal centerline of a vehicle body of the current vehicle and passes through a first parking space corner point of the current angled parking space, and the first parking space corner point is an obtuse parking space corner point formed by a parking-out parking space line of the current angled parking space.

The distance determination module 430 is configured to determine an interval distance between the current vehicle and the compensation auxiliary line according to the current parking space coordinates and the current vehicle coordinates and determine the interval distance as a parking-out compensation distance of the current vehicle when parking out of the current angled parking space without colliding with the obstruction vehicle.

The parking-out control module 440 is configured to control the current vehicle to move the parking-out compensation distance and then park out of the current angled parking space.

Optionally, the distance determination module 430 includes a parking-out type determination unit, an intersection distance determination unit, a first interval distance determination unit, and a second interval distance determination unit.

The parking-out type determination unit is configured to determine a parking-out type of the current vehicle according to the current parking space coordinates and the current vehicle coordinates.

The intersection distance determination unit is configured to determine an intersection distance between a first vertical point and a first point of intersection, where the first vertical point is a point of intersection between the longitudinal centerline of the vehicle body and the compensation auxiliary line, and the first point of intersection is a point of intersection between the longitudinal centerline of the vehicle body and the parking-out parking space line.

The first interval distance determination unit is configured to, when the parking-out type is parking out from a front end of the vehicle, acquire a first distance between the center point of an axle and the first point of intersection and a first center point distance between the center point of the axle and the center point of the front end of the vehicle, calculate a first distance difference between the first distance and the first center point distance, and determine a difference between the first distance difference and the intersection distance as the interval distance.

The second interval distance determination unit is configured to, when the parking-out type is parking out from a rear end of the vehicle, acquire a first distance between the center point of the axle and the first point of intersection and a second center point distance between the center point of the axle and the center point of the rear end of the vehicle, calculate a second distance difference between the first distance and the second center point distance, and determine a difference between the second distance difference and the intersection distance as the interval distance.

Optionally, the intersection distance determination unit includes a parking space corner point determination subunit, a second vertical point determination subunit, a second distance determination subunit, a third distance determination subunit, and an intersection distance determination subunit.

The parking space corner point determination subunit is configured to determine coordinates of a second parking space corner point and a cosine value of a second parking space angle according to the current parking space coordinates, where the second parking space corner point is an endpoint of the parking-out parking space line of the current angled parking space in the parking-out direction of the current angled parking space.

The second vertical point determination subunit is configured to determine coordinates of a second vertical point on a second perpendicular line according to the current parking space coordinates and the current vehicle coordinates, where the second perpendicular line is a line segment from the center point of the axle of the current vehicle to the parking-out parking space line of the current angled parking space, and the second vertical point is a point of intersection between the second perpendicular line and the parking-out parking space line.

The second distance determination subunit is configured to determine a second distance between the second parking space corner point and the second vertical point according to the coordinates of the second parking space corner point and the coordinates of the second vertical point on the parking-out parking space line.

The third distance determination subunit is configured to determine a third distance between the center point of the axle and the second vertical point according to coordinates of the center point of the axle and the coordinates of the second vertical point.

The intersection distance determination subunit is configured to determine, based on theorems in plane geometry, the intersection distance between the first vertical point and the first point of intersection according to the second distance, the third distance, and the cosine value of the second parking space angle.

Optionally, the second interval distance determination unit includes a first distance determination subunit.

The first distance determination subunit is configured to determine, based on the theorems in plane geometry, the first distance between the center point of the axle and the first point of intersection according to the third distance and the cosine value of the second parking space angle.

Optionally, the parking-out control module 440 includes a parking-in path determination unit, a prediction unit, a first parking-out control unit, and a second parking-out control unit.

The parking-in path determination unit is configured to acquire a parking-in path of the current vehicle.

The prediction unit is configured to predict whether the current vehicle enters the adjacent angled parking space in the parking-out direction during a process of parking out of the current angled parking space according to the parking-in path.

The first parking-out control unit is configured to, in response to determining that the current vehicle does not enter the adjacent angled parking space, control the current vehicle to move the parking-out compensation distance and then park out of the current angled parking space according to the parking-in path.

The second parking-out control unit is configured to, in response to determining that the current vehicle enters the adjacent angled parking space, determine the minimum parking-out lateral distance between the current vehicle and the adjacent angled parking space according to the parking-out compensation distance, determine a planned parking-out path for the current vehicle according to the minimum lateral distance and the parking-out compensation distance, and perform parking out of the current angled parking space according to the planned parking-out path.

Optionally, the second parking-out control unit is specifically configured to perform the following.

A target posture of the current vehicle when the current vehicle is parallel to the parking-out parking space line of the current angled parking space and the distance between the current vehicle and the adjacent angled parking space satisfies the minimum parking-out lateral distance is predicted.

An initial posture of the current vehicle after the current vehicle moves the parking-out compensation distance is acquired.

The planned parking-out path for the current vehicle is determined according to the initial posture and the target posture.

Optionally, the second parking-out control unit is further configured to perform the following.

When the parking-out compensation distance is less than or equal to a calibration distance, the sum of the parking-out compensation distance and the calibration distance is determined as the minimum lateral distance.

When the parking-out compensation distance is greater than the calibration distance, the calibration distance is determined as the minimum lateral distance.

The apparatus for parking out of an angled parking space provided in the embodiment of the present application may perform the method for parking out of an angled parking space provided in any embodiment of the present application and has functional modules and beneficial effects corresponding to the performed method.

Embodiment five

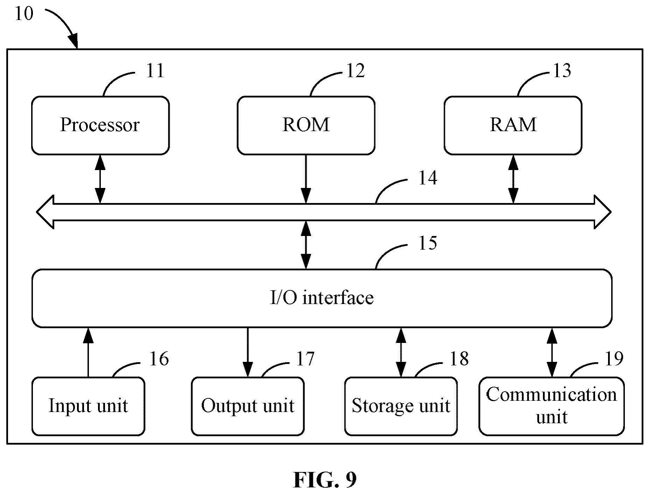

FIG. 9 is a structural diagram of a vehicle 10 that may be used for implementing the embodiments of the present application. Herein the shown components, the connections and relationships between these components, and the functions of these components are merely illustrative and are not intended to limit the implementation of the present application as described and/or claimed herein.

As shown in FIG. 9, the vehicle 10 includes at least one processor 11, and a memory communicatively connected to the at least one processor 11, such as a read-only memory (ROM) 12 or a random-access memory (RAM) 13, where the memory stores a computer program executable by the at least one processor, and the processor 11 may perform various appropriate actions and processing according to the computer program stored in the ROM 12 or the computer program loaded into the RAM 13 from a storage unit 18. Various programs and data required for operations of the vehicle 10 may also be stored in the RAM 13. The processor 11, the ROM 12, and the RAM 13 are connected to each other via a bus 14. An input/output (I/O) interface 15 is also connected to the bus 14.

Multiple components in the vehicle 10 are connected to the I/O interface 15. The multiple components include an input unit 16 such as a button or an operation interface, an output unit 17 such as various types of displays or speakers, the storage unit 18 such as a magnetic disk or an optical disc, and a communication unit 19 such as a network card, a modem, or a wireless communication transceiver. The communication unit 19 allows the vehicle 10 to exchange information/data with other devices over a computer network such as the Internet and/or over various telecommunication networks.

The processors 11 may be various general-purpose and/or special-purpose processing components having processing and computing capabilities. Examples of the processor 11 include, but are not limited to, a central processing unit (CPU), a graphics processing unit (GPU), a special-purpose artificial intelligence (AI) computing chip, a processor executing machine learning models and algorithms, a digital signal processor (DSP), and any appropriate processor, controller, and microcontroller. The processor 11 executes various methods and processes described above, such as the method for parking out of an angled parking space.

In some examples, the method for parking out of an angled parking space may be implemented as a computer program tangibly contained in a computer-readable storage medium such as the storage unit 18. In some embodiments, part or all of the computer programs may be loaded and/or installed on the vehicle 10 via the ROM 12 and/or the communication unit 19. When the computer program is loaded onto the RAM 13 and executed by the processor 11, one or more steps of the method for parking out of an angled parking space described above may be performed. Alternatively, in other examples, the processor 11 may be configured, in any other suitable manner (for example, by means of firmware), to perform the method for parking out of an angled parking space.

The various embodiments of the systems and techniques described herein may be implemented in digital electronic circuitry, integrated circuitry, a field-programmable gate array (FPGA), an application-specific integrated circuit (ASIC), an application-specific standard product (ASSP), a system on a chip (SoC), a complex programmable logic device (CPLD), computer hardware, firmware, software, and/or a combination thereof. The various embodiments may include implementations in one or more computer programs. The one or more computer programs are executable and/or interpretable on a programmable system including at least one programmable processor. The programmable processor may be a special-purpose or general-purpose programmable processor for receiving data and instructions from a memory system, at least one input apparatus, and at least one output apparatus and transmitting data and instructions to the memory system, the at least one input apparatus, and the at least one output apparatus.

Computer programs for implementation of the methods of the present application may be written in one programming language or any combination of multiple programming languages. The computer programs may be provided for a processor of a general-purpose computer, a special-purpose computer, or another programmable data processing apparatus to enable functions/operations specified in a flowchart and/or a block diagram to be implemented when the computer programs are executed by the processor. The computer programs may be executed entirely on a machine, partly on a machine, as a stand-alone software package partly on a machine and partly on a remote machine, or entirely on a remote machine or a server.

In the context of the present application, the computer-readable storage medium may be a tangible medium that may include or store a computer program used by or used in conjunction with an instruction execution system, apparatus, or vehicle. The computer-readable storage medium may include, but is not limited to, an electronic, magnetic, optical, electromagnetic, infrared, or semiconductor system, apparatus, or vehicle or any suitable combination thereof. Optionally, the computer-readable storage medium may be a machine-readable signal medium. More specific examples of the machine-readable storage medium may include an electrical connection based on one or more wires, a portable computer disk, a hard disk, a random-access memory (RAM), a read-only memory (ROM), an erasable programmable read-only memory (EPROM), a flash memory, an optical fiber, a portable compact disc read-only memory (CD-ROM), an optical memory device, a magnetic memory device, or any suitable combination thereof.

In order that interaction with a user is provided, the systems and techniques described herein may be implemented on a vehicle. The vehicle has a display apparatus (for example, a cathode-ray tube (CRT) or liquid-crystal display (LCD) monitor) for displaying information to the user and a keyboard and a pointing apparatus (for example, a mouse or a trackball) through which the user can provide input for the vehicle. Other types of apparatuses may also be used for providing interaction with a user. For example, feedback provided for the user may be sensory feedback in any form (for example, visual feedback, auditory feedback, or tactile feedback); and input from the user may be received in any form (including acoustic input, voice input, or tactile input).

The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with embodiments of the systems and techniques described herein), or a computing system including any combination of such back-end, middleware, or front-end components. Components of a system may be interconnected by any form or medium of digital data communication (for example, a communication network). Examples of the communication network include a local area network (LAN), a wide area network (WAN), a blockchain network, and the Internet.

The computing system may include clients and servers. A client and a server are generally remote from each other and typically interact through a communication network. The relationship between the client and the server arises by virtue of computer programs running on respective computers and having a client-server relationship to each other. The server may be a cloud server, also referred to as a cloud computing server or a cloud host. As a host product in a cloud computing service system, the server solves the defects of difficult management and weak service scalability in conventional physical host and virtual private server (VPS) services.

It is to be understood that various forms of the preceding flows may be used with steps reordered, added, or removed. For example, the steps described in the present application may be executed in parallel, in sequence, or in a different order as long as the desired results of the technical solutions in the present application can be achieved. The execution sequence of these steps is not limited herein.

## Claims

1. A method for parking out of an angled parking space, applied to a current vehicle parked in a current angled parking space, wherein an obstruction vehicle is parked in an adjacent angled parking space on a side of the current angled parking space in a parking-out direction, and the method comprises:

   acquiring current parking space coordinates of the current angled parking space and current vehicle coordinates of the current vehicle;
   determining a compensation auxiliary line of the current vehicle in the current angled parking space, wherein the compensation auxiliary line is perpendicular to a longitudinal centerline of a vehicle body of the current vehicle and passes through a first parking space corner point of the current angled parking space, and the first parking space corner point is an endpoint of a parking-out parking space line of the current angled parking space in an opposite direction of the parking-out direction of the current angled parking space;

determining an interval distance between the current vehicle and the compensation auxiliary line according to the current parking space coordinates and the current vehicle coordinates and determining the interval distance as a parking-out compensation distance of the current vehicle;
and
controlling the current vehicle to move the parking-out compensation distance and then park out of the current angled parking space.

2. The method of claim 1, wherein determining the interval distance between the current vehicle and the compensation auxiliary line according to the current parking space coordinates and the current vehicle coordinates comprises:

determining a parking-out type of the current vehicle according to the current parking space coordinates and the current vehicle coordinates;
determining an intersection distance between a first vertical point and a first point of intersection, wherein the first vertical point is a point of intersection between the longitudinal centerline of the vehicle body and the compensation auxiliary line, and the first point of intersection is a point of intersection between the longitudinal centerline of the vehicle body and the parking-out parking space line;
when the parking-out type is parking out from a front end of the vehicle, acquiring a first distance between a center point of an axle and the first point of intersection and a first center point distance between the center point of the axle and a center point of the front end of the vehicle, calculating a first distance difference between the first distance and the first center point distance, and determining a difference between the first distance difference and the intersection distance as the interval distance; and
when the parking-out type is parking out from a rear end of the vehicle, acquiring the first distance between the center point of the axle and the first point of intersection and a second center point distance between the center point of the axle and a center point of the rear end of the vehicle, calculating a second distance difference between the first distance and the second center point distance, and determining a difference between the second distance difference and the intersection distance as the interval distance.

3. The method of claim 2, wherein determining the intersection distance between the first vertical point and the first point of intersection comprises:

determining coordinates of a second parking space corner point and a cosine value of a second parking space angle according to the current parking space coordinates, wherein the second parking space corner point is an endpoint of the parking-out parking space line of the current angled parking space in the parking-out direction of the current angled parking space;
determining coordinates of a second vertical point on a second perpendicular line according to the current parking space coordinates and the current vehicle coordinates, wherein the second perpendicular line is a line segment from the center point of the axle of the current vehicle to the parking-out parking space line of the current angled parking space, and the second vertical point is a point of intersection between the second perpendicular line and the parking-out parking space line;
determining a second distance between the second parking space corner point and the second vertical point according to the coordinates of the second parking space corner point and the coordinates of the second vertical point on the parking-out parking space line;
determining a third distance between the center point of the axle and the second vertical point according to coordinates of the center point of the axle and the coordinates of the second vertical point; and
determining, based on theorems in plane geometry, the intersection distance between the first vertical point and the first point of intersection according to the second distance, the third distance, and the cosine value of the second parking space angle.

4. The method of claim 3, wherein acquiring the first distance between the center point of the axle and the first point of intersection comprises:
determining, based on the theorems in plane geometry, the first distance between the center point of the axle and the first point of intersection according to the third distance and the cosine value of the second parking space angle.

5. The method of claim 1, wherein controlling the current vehicle to move the parking-out compensation distance and then park out of the current angled parking space comprises:

acquiring a parking-in path of the current vehicle;
predicting whether the current vehicle enters the adjacent angled parking space in the parking-out direction during a process of parking out of the current angled parking space according to the parking-in path;

in response to determining that the current vehicle does not enter the adjacent angled parking space, controlling the current vehicle to move the parking-out compensation distance and then park out of the current angled parking space according to the parking-in path; and

in response to determining that the current vehicle enters the adjacent angled parking space, determining a minimum parking-out lateral distance between the current vehicle and the adjacent angled parking space according to the parking-out compensation distance, determining a planned parking-out path for the current vehicle according to the minimum lateral distance and the parking-out compensation distance, and parking out of the current angled parking space according to the planned parking-out path.

6. The method of claim 5, wherein determining the planned parking-out path for the current vehicle according to the minimum lateral distance and the parking-out compensation distance comprises:

predicting a target posture of the current vehicle when the current vehicle is parallel to the parking-out parking space line of the current angled parking space and a distance between the current vehicle and the adjacent angled parking space satisfies the minimum parking-out lateral distance;

acquiring an initial posture of the current vehicle after the current vehicle moves the parking-out compensation distance; and

determining the planned parking-out path for the current vehicle according to the initial posture and the target posture.

7. The method of claim 5, wherein determining the minimum parking-out lateral distance between the current vehicle and the adjacent angled parking space according to the parking-out compensation distance comprises:

when the parking-out compensation distance is less than or equal to a calibration distance, determining a sum of the parking-out compensation distance and the calibration distance as the minimum lateral distance; and

when the parking-out compensation distance is greater than the calibration distance, determining the calibration distance as the minimum lateral distance.

8. An apparatus for parking out of an angled parking space, applied to a current vehicle parked in a current angled parking space, wherein an obstruction vehicle is parked in an adjacent angled parking space on a side of the current angled parking space in a parking-out direction, and the apparatus comprises:

a coordinate acquisition module configured to acquire current parking space coordinates of the current angled parking space and current vehicle coordinates of the current vehicle;

an auxiliary line determination module configured to determine a compensation auxiliary line of the current vehicle in the current angled parking space, wherein the compensation auxiliary line is perpendicular to a longitudinal centerline of a vehicle body of the current vehicle and passes through a first parking space corner point of the current angled parking space, and the first parking space corner point is an obtuse parking space corner point formed by a parking-out parking space line of the current angled parking space;

a distance determination module configured to determine an interval distance between the current vehicle and the compensation auxiliary line according to the current parking space coordinates and the current vehicle coordinates and determine the interval distance as a parking-out compensation distance of the current vehicle when parking out of the current angled parking space without colliding with the obstruction vehicle; and

a parking-out control module configured to control the current vehicle to move the parking-out compensation distance and then park out of the current angled parking space.

9. A vehicle, comprising:

at least one processor; and

a memory communicatively connected to the at least one processor;

wherein the memory is configured to store at least one computer program executable by the at least one processor, and

wherein the at least one computer program is configured to, when executed by the at least one processor, cause the at least one processor to perform the method for parking out of an angled parking space of any one of claims 1 to 7.

10. A computer-readable storage medium storing computer instructions which, when executed by a processor, cause the processor to perform the method for parking out of an angled parking space of any one of claims 1 to 7.

Acquire current parking space coordinates of the current angled parking space and current vehicle coordinates of the current vehicle ∿ S110

Determine a compensation auxiliary line of the current vehicle in the current angled parking space, where the compensation auxiliary line is perpendicular to a longitudinal centerline of a vehicle body of the current vehicle and passes through a first parking space corner point of the current angled parking space, and the first parking space corner point is an endpoint of a parking-out parking space line in the current angled parking space in an opposite direction of the parking-out direction of the current angled parking space ∿ S120

Determine an interval distance between the current vehicle and the compensation auxiliary line according to the current parking space coordinates and the current vehicle coordinates and determine the interval distance as a parking-out compensation distance of the current vehicle ∿ S130

Control the current vehicle to move the parking-out compensation distance and then park out of the current angled parking space ∿ S140

**FIG. 1**

**FIG. 2**

**FIG. 3**

Acquire the current parking space coordinates of the current angled parking space and the current vehicle coordinates of the current vehicle ∿S210

Determine a compensation auxiliary line of the current vehicle in the current angled parking space, where the compensation auxiliary line is perpendicular to the longitudinal centerline of a vehicle body of the current vehicle and passes through a first parking space corner point of the current angled parking space, and the first parking space corner point is an obtuse parking space corner point formed by a parking-out parking space line in the current angled parking space ∿S220

Determine a parking-out type of the current vehicle according to the current parking space coordinates and the current vehicle coordinates ∿S230

Determine an intersection distance between a first vertical point and a first point of intersection, where the first vertical point is a point of intersection between the longitudinal centerline of the vehicle body and the compensation auxiliary line, and the first point of intersection is a point of intersection between the longitudinal centerline of the vehicle body and the parking-out parking space line ∿S240

When the parking-out type is parking out from a front end of the vehicle, acquire a first distance between the center point of an axle and the first point of intersection and a first center point distance between the center point of the front end of the vehicle and the center point of the axle, calculate a first distance difference between the first distance and the first center point distance, and determine a difference between the first distance difference and the intersection distance as the interval distance ∿S250

When the parking-out type is parking out from a rear end of the vehicle, acquire a first distance between the center point of the axle and the first point of intersection and a second center point distance between the center point of the rear end of the vehicle and the center point of the axle, calculate a second distance difference between the first distance and the second center point distance, and determine a difference between the second distance difference and the intersection distance as the interval distance ∿S260

Determine the interval distance as the parking-out compensation distance of the current vehicle ∿S270

Control the current vehicle to move the parking-out compensation distance and then park out of the current angled parking space ∿S280

**FIG. 4**

**FIG. 5**

Acquire the current parking space coordinates of the current angled parking space and the current vehicle coordinates of the current vehicle ~ S310

Determine a compensation auxiliary line of the current vehicle in the current angled parking space, where the compensation auxiliary line is perpendicular to the longitudinal centerline of a vehicle body of the current vehicle and passes through a first parking space corner point of the current angled parking space, and the first parking space corner point is an obtuse parking space corner point formed by a parking-out parking space line in the current angled parking space ~ S320

Determine an interval distance between the current vehicle and the compensation auxiliary line according to the current parking space coordinates and the current vehicle coordinates and determine the interval distance as a parking-out compensation distance of the current vehicle ~ S330

Acquire a parking-in path of the current vehicle, and predict whether the current vehicle enters the adjacent angled parking space in the parking-out direction during a process of parking out of the current angled parking space according to the parking-in path ~ S340

In response to determining that the current vehicle does not enter the adjacent angled parking space, control the current vehicle to move the parking-out compensation distance and then park out of the current angled parking space according to the parking-in path ~ S350

In response to determining that the current vehicle enters the adjacent angled parking space, determine the minimum parking-out lateral distance between the current vehicle and the adjacent angled parking space according to the parking-out compensation distance, determine a planned parking-out path for the current vehicle according to the parking-out compensation distance and the minimum lateral distance, and park out of the current angled parking space according to the planned parking-out path ~ S360

**FIG. 6**

**FIG. 7**

**FIG. 8**

10

11
Processor

12
ROM

13
RAM

14

15
I/O interface

16
Input unit

17
Output unit

18
Storage unit

19
Communication unit

**FIG. 9**

## INTERNATIONAL SEARCH REPORT

| International application No. |
| --- |
| **PCT/CN2023/141354** |

**A. CLASSIFICATION OF SUBJECT MATTER**

B60W30/06(2006.01)i; B60W40/02(2006.01)i; B60W60/00(2020.01)i

According to International Patent Classification (IPC) or to both national classification and IPC

**B. FIELDS SEARCHED**

Minimum documentation searched (classification system followed by classification symbols)

IPC:B60W30/-, B60W40/-, B60W60/-

Documentation searched other than minimum documentation to the extent that such documents are included in the fields searched

Electronic data base consulted during the international search (name of data base and, where practicable, search terms used)

CNTXT, CNABS, CNKI, 读秀, DUXIU: 德赛西威汽车电子, 斜车位, 泊出, 坐标, 辅助线, 垂直, 角点, 补偿, 距离; VEN, EXTXT, IEEE: inclined 3w position, park+ out, coordinate, auxiliary line, perpendicular, corner 3w point, compensation, distance.

**C. DOCUMENTS CONSIDERED TO BE RELEVANT**

| Category* | Citation of document, with indication, where appropriate, of the relevant passages | Relevant to claim No. |
| --- | --- | --- |
| PX | CN 116552507 A (HUIZHOU DESAY SV AUTOMOTIVE CO., LTD.) 08 August 2023 (2023-08-08)<br>entire document | 1-10 |
| A | CN 115027453 A (ANHUI YUCHI INTELLIGENT TECHNOLOGY CO., LTD.) 09 September 2022 (2022-09-09)<br>entire document | 1-10 |
| A | CN 111624610 A (DONGFENG MOTOR CORPORATION) 04 September 2020 (2020-09-04)<br>entire document | 1-10 |
| A | CN 111731275 A (CHINA FAW CO., LTD.) 02 October 2020 (2020-10-02)<br>entire document | 1-10 |
| A | CN 115817457 A (GAC EON NEW ENERGY AUTOMOBILE CO., LTD.) 21 March 2023 (2023-03-21)<br>entire document | 1-10 |

☑ Further documents are listed in the continuation of Box C.    ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
| --- | --- |
| **06 March 2024** | **07 March 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2023/141354** |

**C.     DOCUMENTS CONSIDERED TO BE RELEVANT**

| Category* | Citation of document, with indication, where appropriate, of the relevant passages | Relevant to claim No. |
|---|---|---|
| A | DE 102015118584 A1 (VALEO SCHALTER & SENSOREN GMBH.) 04 May 2017 (2017-05-04)<br>    entire document | 1-10 |

Form PCT/ISA/210 (second sheet) (July 2022)

**INTERNATIONAL SEARCH REPORT**
Information on patent family members

International application No.

**PCT/CN2023/141354**

| Patent document cited in search report | | | Publication date (day/month/year) | Patent family member(s) | | | Publication date (day/month/year) |
|---|---|---|---|---|---|---|---|
| CN | 116552507 | A | 08 August 2023 | None | | | |
| CN | 115027453 | A | 09 September 2022 | None | | | |
| CN | 111624610 | A | 04 September 2020 | CN | 111624610 | B | 30 August 2022 |
| CN | 111731275 | A | 02 October 2020 | CN | 111731275 | B | 07 December 2021 |
| CN | 115817457 | A | 21 March 2023 | CN | 115817457 | B | 25 April 2023 |
| DE | 102015118584 | A1 | 04 May 2017 | None | | | |

Form PCT/ISA/210 (patent family annex) (July 2022)

**EP 4 717 539 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310590218